# FASCICULE DE BREVET EUROPEEN

(11) **EP 3 381 291 B1**
(45) Date de publication et mention de la délivrance du brevet: **28.10.2020**
(21) Numéro de dépôt: 18164411.3
(22) Date de dépôt: 27.03.2018
(51) Int. Cl.: A21D 17/00, B65D 81/34, A21D 13/32, A21D 15/02

(54) **PROCÉDÉ DE FABRICATION DE SANDWICHS SURGELÉS MICRO-ONDABLES**
HERSTELLUNGSVERFAHREN VON TIEFGEFRORENEN MIKROWELLENTAUGLICHEN SANDWICHS
PROCESS FOR THE MANUFACTURE OF FROZEN SANDWICHES FOR MICRO-WAVE

(30) Priorité: 28.03.2017 FR 1752563
(43) Date de publication de la demande: 03.10.2018
(73) Titulaire: So Fast So Good, 10100 Romilly-sur-Seine (FR)
(72) Inventeur: FERRY, Patrick, 10000 TROYES (FR)
(74) Mandataire: Lavoix

(56) Documents cités:
- EP-A2- 1 291 298
- WO-A1-03/003839
- NL-C2- 1 023 618
- NL-C2- 1 023 618
- US-A1- 2007 241 102
- US-A1- 2009 045 190
- US-A1- 2009 155 426
- US-A1- 2013 313 251

## Description

La présente invention concerne la fabrication de sandwichs surgelés micro-ondables.

Les sandwichs surgelés sont recherchés par les consommateurs du fait de leur longue durée de vie. Ils peuvent être achetés surgelés puis réchauffés à la demande, de préférence au four à micro-onde. Toutefois le chauffage par micro-onde affecte le caractère croustillant du pain du sandwich, celui devenant soit trop mou soit trop dur pour qu'il soit apprécié par le consommateur.

Des suscepteurs sont généralement utilisés lors du chauffage par micro-onde de ces sandwichs afin d'améliorer leur caractère croustillant. De tels sandwichs surgelés micro-ondables sont ainsi fabriqués par Cobral. US 2007/241102 A1 décrit un ensemble sandwich surgelé micro-ondable - suscepteur pour micro-ondes.

EP 1 291 298 A2, US 2013/313251 A1, NL 1 023 618 C2 et US 2009/155426 A1 décrivent des procédé de fabrication de sandwichs surgelés micro-ondables. Néanmoins, jusqu'à présent, le résultat obtenu reste insuffisant en terme de croustillant.

Il existe donc un besoin important de nouveaux sandwichs surgelés pouvant être réchauffés au micro-onde, qui une fois réchauffés au micro-onde conservent un caractère croustillant similaire à celui d'un pain non-surgelé et/ou non réchauffé au micro-onde.

La présente invention résulte de la découverte inattendue par les inventeurs que lorsque le sandwich est surgelé, lors de sa fabrication, dans un suscepteur pour micro-onde qui est en contact direct avec sa face supérieure et sa face inférieure, ce sandwich, une fois réchauffé au micro-onde dans ce même suscepteur, présente un caractère croustillant similaire à celui d'un pain non-surgelé et/ou non réchauffé au micro-onde. Les inventeurs ont aussi montré que le fait de mettre en oeuvre l'étape de façonnage moins de 15 min après la fin de l'étape de pétrissage permettait d'améliorer encore le caractère croustillant du sandwich surgelé.

La présente invention concerne donc un procédé de fabrication de sandwich surgelé micro-ondable, comprenant, entre l'étape de garnissage du sandwich et l'étape de surgélation dudit sandwich, une étape d'emballage du sandwich caractérisée en ce que :
(i) le sandwich est placé dans un suscepteur pour micro-ondes de telle sorte que ledit suscepteur est en contact avec la face supérieure et la face inférieure dudit sandwich, et
(ii) l'ensemble sandwich-suscepteur est ensuite emballé dans un film plastique adapté à un chauffage par micro-ondes, et comprenant, avant l'étape de garnissage du sandwich, une étape de fabrication du pain du sandwich, ladite étape de fabrication du pain comprenant une étape de pétrissage et une étape de façonnage, l'étape de façonnage étant mise en oeuvre moins de 15 min après la fin de l'étape de pétrissage.

### Description détaillée de l'invention

Par "sandwich", on entend ici un ensemble comprenant au moins deux couches de pain de toute nature, au moins une des couches constituant la face supérieure du sandwich et au moins une autre des couches constituant la face inférieure du sandwich, lesdites au moins deux couches étant séparées par une garniture, ladite garniture pouvant être constituée de tout type d'aliments tels que de la charcuterie, de la viande, du poisson, des œufs, du fromage, des légumes, des fruits, et des mélanges de ceux-ci. De préférence, la garniture est un constituée d'aliments pouvant être surgelés et chauffés au micro-onde.

Le pain constituant les au moins deux couches dudit sandwich peut être un pain de mie, un pain burger, un pain bagel, un pain pour panini, ou un pain ciabatta. Le pain peut en particulier être un pain avec gluten ou un pain sans gluten.

Par "sandwich surgelé", on entend ici un sandwich tel que défini ci-dessus dont l'ensemble des constituants, en particulier le pain et la garniture, est surgelé.

Par "sandwich surgelé micro-ondable", on entend ici que le sandwich tel que défini ci-dessus, une fois surgelé, peut être réchauffé, autrement dit décongelé puis chauffé, par chauffage aux micro-ondes, sans que les qualités organoleptiques du sandwich, en particulier du pain constituant le sandwich, ne soient affectées.

Par "suscepteur pour micro-onde", on entend ici un étui, dans lequel le sandwich peut être placé, dans lequel au moins la face intérieure supérieure de l'étui et au moins la face intérieure inférieure de l'étui sont recouvertes de matériau suscepteur pour micro-onde.

Dans un mode de réalisation particulier, ledit suscepteur pour micro-onde présente une ouverture par laquelle le sandwich peut être retiré.

Dans un mode de réalisation préféré, toutes les faces intérieures dudit suscepteur pour micro-onde sont recouvertes de matériau suscepteur pour micro-onde.

Le suscepteur pour micro-onde utilisé dans le cadre de l'invention peut avoir toute forme adaptée pour servir d'étui audit sandwich. De préférence, la forme dudit suscepteur pour micro-onde est adaptée à la forme du sandwich, de manière à ce que ses faces intérieures supérieure et inférieure soient facilement mises en contact avec la face supérieure et la face inférieure dudit sandwich.

Ainsi, dans un mode de réalisation particulier, le suscepteur pour micro-onde est de forme cylindrique, notamment de section ellipsoïdale ou circulaire, ouverte ou pouvant être ouverte à au moins l'une de ses extrémités. Dans un autre mode réalisation particulier, le suscepteur pour micro-onde est de forme parallélépipédique, ouverte ou pouvant être ouverte à au moins l'une de ses extrémités.

Par "matériau suscepteur pour micro-onde", on entend ici un matériau capable d'absorber l'énergie magnétique, en particulier les radiations micro-onde, et de la transformer en chaleur. De tels matériaux suscepteurs sont bien connus de l'homme du métier et incluent des métaux tels que l'aluminium, l'antimoine, le bronze, le chrome, le cuivre, l'or, le fer, le nickel, l'étain et le zinc, ces métaux pouvant être utilisés sous forme de poudre ou de flocons avec un liant ou entremêlés dans un film de polymère; des oxydes métalliques; du carbone sous la forme de graphite ou de noir de carbone; et des mélanges de ceux-ci. De préférence, le matériau suscepteur pour micro-onde utilisé dans le cadre de l'invention est constitué de polyester enduit d'oxyde d'aluminium.

Dans un mode de réalisation particulièrement préféré, le suscepteur pour micro-onde est un étui en carton laminé dont toutes les faces intérieures sont recouvertes d'une feuille de polyester enduit d'oxyde d'aluminium.

Dans le cadre de l'invention, le sandwich est placé dans ledit suscepteur de telle sorte que ledit suscepteur est en contact avec la face supérieure et la face inférieure dudit sandwich.

Il sera clairement apparent pour l'homme métier qu'en fonction de la forme (généralement plus ou moins arrondie sur les côtés) et du relief du sandwich, ledit suscepteur, du fait de sa forme et de sa rigidité, pourra être en contact avec toute la face supérieure et toute la face inférieure dudit sandwich ou uniquement être en contact avec substantiellement toute la face supérieure et substantiellement toute la face inférieure dudit sandwich. En particulier, le suscepteur peut être en contact avec toute la face supérieure et toute la face inférieure dudit sandwich, y compris la périphérie de chacune de ces faces, ou uniquement en contact avec substantiellement toute la face supérieure et substantiellement toute la face inférieure.

Par "en contact avec substantiellement toute la face", on entend ici que le suscepteur est en contact avec la totalité de la face du sandwich, à l'exception de quelques zones de surface réduite, de préférence des zones situées en périphérie de la face du sandwich, ces quelques zones de surface réduite représentant de préférence une surface totale de moins de 30% de la surface de la face du sandwich.

Dans un mode de réalisation particulier, le suscepteur est en contact avec toute la face supérieure dudit sandwich à l'exception de la zone périphérique de la face supérieure représentant moins de 30% de la surface totale de la face supérieure du sandwich, et est en contact avec toute la face inférieure dudit sandwich.

Les inventeurs ont montré que la présence d'un film plastique, perforé ou non selon le pain utilisé pour le sandwich considéré, autour de l'ensemble sandwich surgelé micro-ondable - suscepteur pour micro-ondes, permettait, lors du réchauffage du sandwich au micro-onde, de conserver un taux d'humidité adapté pour améliorer encore le caractère croustillant, et éventuellement moelleux, du sandwich.

Par "film plastique adapté à un chauffage par micro-onde", on entend ici un film dans un matériau plastique résistant aux micro-ondes, en particulier ne fondant pas sous l'action des micro-ondes.

De tels matériaux plastiques sont bien connus de l'homme du métier et incluent le polypropylène, le polyéthylène de haute densité, le polyéthylène téréphthalate en particulier le polyéthylène téréphtalate crystallin (CPET).

Dans un mode de réalisation préféré, ledit film plastique est en polypropylène.

Le film plastique utilisé dans le cadre de l'invention peut être un film plastique perforé ou non.

De préférence, le film plastique recouvre la totalité de l'ensemble sandwich surgelé micro-ondable - suscepteur. Dans un mode de réalisation préféré, l'emballage constitué par le film plastique, perforé ou non, est fermé, de préférence scellé.

Dans la mesure où le film plastique est adapté à un chauffage par micro-ondes, il n'est pas nécessaire de le retirer avant de chauffer l'ensemble sandwich surgelé micro-ondable - suscepteur.

L'emballage constitué par le film plastique peut toutefois comprendre un système d'ouverture, tel qu'une ouverture pré-découpée.

La présente invention concerne un procédé de fabrication de sandwich surgelé micro-ondable, en particulier de l'ensemble sandwich surgelé micro-ondable - suscepteur selon l'invention.

Le procédé de fabrication de sandwich surgelé micro-ondable selon l'invention comprend, entre l'étape de garnissage du sandwich et l'étape de surgélation dudit sandwich, une étape d'emballage du sandwich caractérisée en ce que :
(i) le sandwich est placé dans un suscepteur pour micro-ondes, tel que défini ci-dessus, de telle sorte que ledit suscepteur est en contact avec la face supérieure et la face inférieure dudit sandwich, et
(ii) l'ensemble sandwich-suscepteur est ensuite emballé dans un film plastique adapté à un chauffage par micro-ondes, tel que défini ci-dessus,
   et comprenant, avant l'étape de garnissage du sandwich, une étape de fabrication du pain du sandwich, ladite étape de fabrication du pain comprenant une étape de pétrissage et une étape de façonnage, l'étape de façonnage étant mise en oeuvre moins de 15 min après la fin de l'étape de pétrissage.

Par "garnissage", on entend ici le processus consistant à incorporer entre au moins deux couches de pain, une garniture telle que définie ci-dessus.

L'étape de garnissage peut être mise en œuvre par toute technique bien connue de l'homme du métier. De préférence, le garnissage est réalisé en continu sur un tapis de convoyage. En particulier, un pain peut être découpé en deux, placé sur un tapis de convoyage puis garni avec la garniture telle que définie ci-dessus.

Par "surgélation", on entend ici une technique industrielle qui consiste à refroidir brutalement des aliments en les exposant intensément à des températures allant de - 18°C à -40°C. La surgélation peut être mise en œuvre par toute technique bien connue de l'homme du métier. Dans un mode de réalisation particulier, l'étape de surgélation est mise en œuvre pendant 3 à 10 h, en particulier pendant 3h30 à 9h30, pendant 4h à 9h, pendant 4h30 à 8h30, pendant 5h à 8h, pendant 5h30 à 7h30, pendant 6h à 7h30 ou pendant 6h30 à 7h, à une température comprise entre -30°C et -50°C, de préférence entre -35°C et -45°C, entre -30°C et -40°C, ou entre -35°C et -38°C.

Dans le cadre de l'invention, le sandwich est emballé dans un suscepteur pour micro-ondes, tel que défini ci-dessus, de telle sorte que ledit suscepteur est en contact avec la face supérieure et la face inférieure dudit sandwich, comme défini ci-dessus.

L'étape d'emballage peut être mise en œuvre par toute technique bien connue de l'homme du métier. Dans un mode de réalisation particulier, le suscepteur pour micro-ondes est mis en place manuellement. Dans un mode de réalisation particulier, le film plastique est mis en place au moyen d'un dispositif de type flow-pack.

Dans un mode de réalisation particulier, le procédé de fabrication selon l'invention comprend après l'étape d'emballage du sandwich, une étape de mise en étui carton de l'ensemble sandwich-suscepteur-film.

L'étape de mise en étui carton peut être mise en œuvre par toute technique bien connue de l'homme du métier. En particulier, la mise en étui carton peut être effectuée au moyen d'une étuyeuse.

Dans un mode de réalisation particulier, l'étui carton inclut un système permettant de sortir le sandwich au fur et à mesure de sa consommation.

Dans un mode de réalisation particulier, l'étape de mise en étui carton est mise en œuvre avant l'étape de surgélation.

Le pain utilisé dans le procédé de fabrication selon l'invention peut être tout pain tel que défini ci-dessus.

Le procédé de fabrication de sandwich selon l'invention comprend, avant l'étape de garnissage du sandwich, une étape de fabrication du pain du sandwich, ladite étape de fabrication du pain comprenant une étape de pétrissage et une étape de façonnage, l'étape de façonnage étant de préférence mise en œuvre moins de 15 min après la fin de l'étape de pétrissage.

De manière étonnante, les inventeurs ont montré que le fait de mettre en œuvre l'étape de façonnage moins de 15 min après la fin de l'étape de pétrissage permettait d'améliorer encore le caractère croustillant du sandwich surgelé.

Par "pétrissage", on entend ici la première phase du processus de production d'une pâte, en particulier d'une pâte à pain, consistant à appliquer une force mécanique afin d'obtenir l'homogénéisation des ingrédients constituant le pain et des propriétés mécaniques et physiques pour la pétrissée en fin d'opération.

Le pétrissage comprend ainsi de préférence le mélange et l'homogénéisation de farine, eau, levure et sel. Comme il sera clairement apparent à l'homme du métier, les ingrédients spécifiques utilisés lors du pétrissage dépendront du type de pain fabriqué. Le pétrissage peut être mis en œuvre par toute technique bien connue de l'homme du métier. En particulier, le pétrissage peut être mis en œuvre au moyen d'un pétrin spirale ou oblique, de préférence au moyen d'un pétrin spirale.

Par "façonnage", on entend ici la mise en forme de la pâte produite à l'issue du pétrissage. Comme il sera clairement apparent à l'homme du métier, la mise en forme de la pâte dépendra de la forme recherchée pour le sandwich fabriqué. De préférence, le façonnage est réalisé en continu. De manière particulièrement préférée, l'étape de façonnage est mise en œuvre par laminage, de préférence sans contrainte sur la pâte.

De préférence, l'étape de façonnage est mise en œuvre moins de 15 min, en particulier moins de 13 min, moins de 12 min, moins de 11 min ou moins de 10 min après la fin de l'étape de pétrissage.

Dans un mode de réalisation particulier, l'étape de fabrication du pain comprend, après l'étape de façonnage, une étape d'étuvage à une température de préférence comprise entre 35°C et 40°C suivie de préférence d'une étape de cuisson à une température de préférence comprise entre 200°C et 250°C.

Dans un mode de réalisation particulier, l'étape de fabrication du pain comprend, après l'étape de façonnage, une étape d'étuvage à une température comprise entre 35°C et 40°C à une hygrométrie de 90° suivie de préférence d'une étape de cuisson à une température de préférence comprise entre 200°C et 250°C.

L'étape d'étuvage est de préférence mise en œuvre à une hygrométrie de plus de 75°, en particulier de plus de 80°, de plus de 85°, en particulier une hygrométrie de 90°. De préférence, l'étuvage est mis en œuvre à une température comprise entre 35°C et 40°C, en particulier entre 36°C et 39°C ou entre 37°C et 38°C. De préférence, l'étuvage est mis en œuvre pendant 30 min à 2h, de préférence pendant 45 min à 1h45, ou entre 1h et 1h30, ou entre 1h 15 et 1h30.

L'étape de cuisson peut être mise en œuvre par toute technique bien connue de l'homme du métier. De préférence, l'étape de cuisson est mise en œuvre dans un four rotatif. De préférence, la cuisson est réalisée à une température comprise entre 200°C et 250°C, en particulier entre 210°C et 240°C, ou entre 220°C et 230°C. De préférence, la cuisson est mise en œuvre pendant 5 à 30 min, en particulier pendant 10 à 25 min, pendant 11 à 24 min, pendant 12 à 23 min, pendant 13 à 22 min, pendant 14 à 21 min, pendant 15 à 20 min, pendant 16 à 19 min ou pendant 17 à 18 min.

Dans un mode de réalisation particulier, le procédé de fabrication selon l'invention comprend les étapes suivantes :
a) une étape de pétrissage telle que définie ci-dessus,
b) une étape de façonnage du pain telle que définie ci-dessus, l'étape de façonnage étant de préférence mise en œuvre moins de 15 min après la fin de l'étape de pétrissage,
c) une étape d'étuvage du pain telle que définie ci-dessus à une température de préférence comprise entre 35°C et 40°C à une hygrométrie de 90°,
d) une étape de cuisson du pain telle que définie ci-dessus à une température de préférence comprise entre 200°C et 250°C,
e) une étape de ressuyage du pain éventuellement suivie d'une étape de refroidissement,
f) une étape de découpe du pain,
g) une étape de garnissage du sandwich telle que définie ci-dessus,
h) une étape d'emballage du sandwich telle que définie ci-dessus,
i) une étape de mise en étui carton du sandwich, et
j) une étape de surgélation telle que définie ci-dessus, de préférence pendant 3 à 10 h à une température comprise de préférence entre -30°C et -50°C.

Dans un mode de réalisation particulier de l'invention, le procédé selon l'invention comprend en outre une étape de conditionnement en carton et palettisation.

Lors de sa consommation par un consommateur, le sandwich surgelé micro-ondable obtenu par le procédé selon l'invention est de préférence retiré de son étui-carton et placé directement au micro-onde dans son emballage plastique, à l'intérieur du suscepteur dans lequel il est placé. Il est chauffé dans le four micro-onde pendant le temps indiqué sur l'emballage. Une fois chauffé, le sandwich présente les mêmes caractéristiques de croustillant qu'un sandwich frais.

La présente invention sera décrite plus en détail par les figures et exemples ci-dessous.

### Brève description des figures

La **Figure 1** représente une coupe transversale de l'ensemble sandwich surgelé - micro-ondable - suscepteur selon l'invention.
La **Figure 2** représente une coupe longitudinale de l'ensemble sandwich surgelé - micro-ondable - suscepteur selon l'invention.

### Exemples

### Exemple 1: Exemple de procédé de fabrication selon l'invention

Le procédé de fabrication suivant est mis en œuvre :

### Etape 1 : Pétrissage

Un mélange de farine, eau, levure et sel est pétri dans un pétrin spirale, améliorant pendant 5 min en première vitesse, pendant 8 min en deuxième vitesse.

Après 3 min, la pâte est bassinée avec de l'huile et des rognures de pâtes sont ajoutées 2 min avant la fin du pétrissage.

### Etape 2 : Façonnage

Moins de 10 min après le pétrissage, la pâte est passée sur ligne de façonnage par laminage.

### Etape 3 : Etuvage

La pâte est étuvée à 90° d'hygrométrie à 37°C pendant 1h à 1h30.

### Etape 4 : Cuisson

La pâte à pain est cuite sur four rotatif, à 230°C pendant 10 à 15 min.

### Etape 5 : Réessuyage

Le pain est réessuyé pendant 20 min en température ambiante

### Etape 6 : Refroidissement

Le pain est refroidi dans une salle à 10°C pendant 30 min.

### Etape 7 : Garnissage

Le pain est découpé en deux, mis sur tapis de convoyage et garni avec la garniture.

### Etape 8 : Emballage

Le suscepteur pour micro-onde est mis en place manuellement autour du sandwich et l'ensemble est emballé dans un film plastique au moyen d'un flow-pack.

L'ensemble est ensuite mis en étui carton au moyen d'une étuyeuse.

### Etape 9 : Surgélation

Les sandwichs sont surgelés pendant 6 h à -40°C.

### Etape 10 : Stockage

Les sandwichs sont stockés à -24°C.

Avant consommation, l'ensemble sandwich surgelé - suscepteur pour micro-onde emballé dans le film plastique est retiré de son étui carton et placé directement au micro-onde puis chauffé pendant le temps indiqué.

Le sandwich ainsi obtenu présente un caractère croustillant supérieur à celui des sandwichs de l'état de la technique.

### Exemple 2: Exemple d'ensemble sandwich surgelé micro-ondable - suscepteur selon l'invention

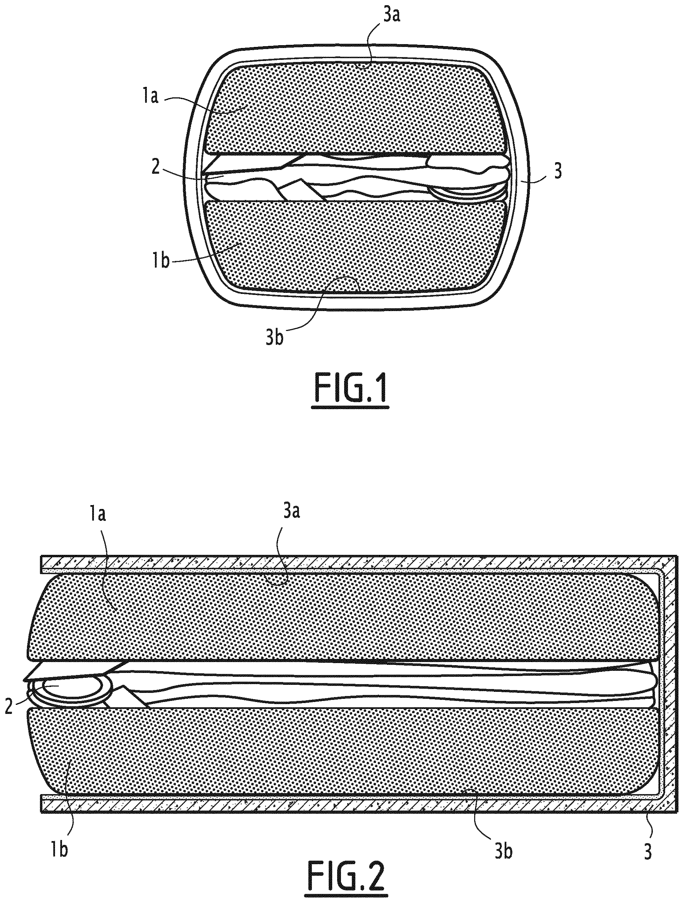

Un ensemble sandwich surgelé micro-ondable - suscepteur pour micro-onde selon la revendication est représenté sur les figures 1 et 2.

En référence à la figure 1, la couche supérieure 1a et la couche inférieure 1b du sandwich sont séparées par une garniture 2. Le sandwich est placé dans un suscepteur pour micro-onde 3 dont la face intérieure supérieure 3a est en contact avec la couche supérieure 1a du sandwich et dont la face intérieure inférieure 3b est en contact avec la couche inférieure 1b du sandwich.

En référence à la figure 2, le suscepteur peut contenir une ouverture à une ou plusieurs de ses extrémités de manière à faciliter la consommation du sandwich.

## Revendications

1. Procédé de fabrication de sandwich surgelé micro-ondable, comprenant, entre l'étape de garnissage du sandwich et l'étape de surgélation dudit sandwich, une étape d'emballage du sandwich **caractérisée en ce que** :
(i) le sandwich est placé dans un suscepteur pour micro-ondes de telle sorte que ledit suscepteur est en contact avec la face supérieure et la face inférieure dudit sandwich, et
(ii) l'ensemble sandwich-suscepteur est ensuite emballé dans un film plastique adapté à un chauffage par micro-ondes,
et comprenant, avant l'étape de garnissage du sandwich, une étape de fabrication du pain du sandwich, ladite étape de fabrication du pain comprenant une étape de pétrissage et une étape de façonnage, l'étape de façonnage étant mise en œuvre moins de 15 min après la fin de l'étape de pétrissage.

2. Procédé selon la revendication 1, dans lequel le suscepteur pour micro-ondes est un étui en carton laminé dont toutes les faces intérieures sont recouvertes d'une feuille de polyester enduit d'oxyde d'aluminium.

3. Procédé selon la revendication 1 ou 2, dans lequel le film plastique est un film de polypropylène.

4. Procédé selon l'une quelconque des revendications 1 à 3, comprenant après l'étape d'emballage du sandwich, une étape de mise en étui carton de l'ensemble sandwich-suscepteur-film.

5. Procédé selon l'une quelconque des revendications 1 à 4, dans lequel l'étape de surgélation est mise en œuvre pendant 3 à 10 h à une température comprise entre -30°C et -50°C.

6. Procédé de fabrication selon l'une quelconque des revendications 1 à 5, dans lequel l'étape de fabrication du pain du sandwich comprend, après l'étape de façonnage, une étape d'étuvage à une température comprise entre 35°C et 40°C à une hygrométrie de 90°, suivie d'une étape de cuisson à une température comprise entre 200°C et 250°C.

7. Procédé de fabrication selon l'une quelconque des revendications 1 à 6, comprenant les étapes suivantes :
a) une étape de pétrissage,
b) une étape de façonnage du pain, l'étape de façonnage étant mise en œuvre moins de 15 min après la fin de l'étape de pétrissage,
c) une étape d'étuvage du pain à une température comprise entre 35°C et 40°C à une hygrométrie de 90°,
d) une étape de cuisson du pain à une température comprise entre 200°C et 250°C,
e) une étape de ressuyage du pain éventuellement suivie d'une étape de refroidissement,
f) une étape de découpe du pain,
g) une étape de garnissage du sandwich,
h) une étape d'emballage du sandwich,
i) une étape de mise en étui carton du sandwich, et
j) une étape de surgélation pendant 3 à 10 h à une température comprise entre - 30°C et -50°C.

## Patentansprüche

1. Verfahren zur Herstellung eines mikrowellengeigneten, tiefgefrorenen Sandwiches, aufweisend, zwischen dem Schritt des Belegens des Sandwiches und dem Schritt des Tiefgefrierens des Sandwiches, einen Schritt des Einpackens des Sandwiches, **dadurch gekennzeichnet, dass**:
(i) das Sandwich in einem Suszeptor für Mikrowellen angeordnet wird, derart, dass der Suszeptor in Kontakt mit der oberen Seite und der unteren Seite des Sandwiches ist, und
(ii) die Sandwich-Suszeptor-Einheit anschließend eingepackt wird in eine Kunststofffolie, die für eine Erwärmung via Mikrowellen geeignet ist,
und aufweisend, vor dem Schritt des Belegens des Sandwiches, einen Schritt der Herstellung des Brötchens des Sandwiches, wobei der Schritt der Herstellung des Brötchens einen Schritt des Knetens und einen Schritt des Formens aufweist, wobei der Schritt des Formens durchgeführt wird weniger als 15 min nach dem Ende des Schritts des Knetens.

2. Verfahren gemäß Anspruch 1, wobei der Suszeptor für Mikrowellen ein Etui aus laminiertem Karton ist, von dem alle inneren Seiten von einer Polyesterfolie bedeckt sind, die mit Aluminiumoxid beschichtet ist.

3. Verfahren gemäß Anspruch 1 oder 2, wobei die Kunststofffolie eine Polypropylenfolie ist.

4. Verfahren gemäß irgendeinem der Ansprüche 1 bis 3, aufweisend, nach dem Schritt des Einpackens des Sandwiches, einen Schritt des Einbringens der Sandwich-Suszeptor-Folie-Einheit in das Kartonetui.

5. Verfahren gemäß irgendeinem der Ansprüche 1 bis 4, wobei der Schritt des Tiefgefrierens durchgeführt wird während 3 bis 10 h bei einer Temperatur, die zwischen -30°C und -50°C beträgt.

6. Verfahren gemäß irgendeinem der Ansprüche 1 bis 5, wobei der Schritt zur Herstellung des Brötchens des Sandwiches aufweist, nach dem Schritt des Formens, einen Schritt des Schmorens bei einer Temperatur, die zwischen 35°C und 40°C liegt, bei einer Luftfeuchtigkeit von 90°, gefolgt von einem Schritt des Backens bei einer Temperatur, die zwischen 200°C und 250°C liegt.

7. Verfahren zur Herstellung gemäß irgendeinem der Ansprüche 1 bis 6, aufweisend die folgenden Schritte:
a) einen Schritt des Knetens,
b) einen Schritt des Formens des Brötchens, wobei der Schritt des Formens durchgeführt weniger als 15 min nach dem Ende des Schritts des Knetens,
c) einen Schritt des Schmorens des Brötchens bei einer Temperatur, die zwischen 35°C und 40°C liegt, bei einer Luftfeuchtigkeit von 90°,
d) einen Schritt des Backens des Brötchens bei einer Temperatur, die zwischen 200°C und 250°C liegt,
e) einen Schritt des Trocknens des Brötchens, ggf. gefolgt von einem Schritt des Gefrierens,
f) einen Schritt des Aufschneidens des Brötchens,
g) einen Schritt des Belegens des Sandwiches,
h) einen Schritt des Einpackens des Sandwiches,
i) einen Schritt des Einbringens des Sandwiches in ein Kartonetui, und
j) einen Schritt des Tiefgefrierens während 3 bis 10 h bei einer Temperatur, die zwischen -30°C und -50°C liegt.

## Claims

1. Process for the manufacture of a microwavable frozen sandwich, comprising, between the step of filling the sandwich and the step of freezing said sandwich, a step of wrapping the sandwich **characterised in that**:
(i) the sandwich is placed in a microwave susceptor so that said susceptor is in contact with the top face and the bottom face of said sandwich, and
(ii) the sandwich-susceptor assembly is then wrapped in a plastics film suitable for microwave heating,
and comprising, before the step of filling the sandwich, a step of manufacturing the bread of the sandwich, said step of manufacturing the bread comprising a kneading step and a shaping step, the shaping step being carried out less than 15 minutes after the end of the kneading step.

2. Process according to claim 1, wherein the microwave susceptor is a carton of laminated cardboard, all the inside faces of which are covered with a sheet of polyester coated with aluminium oxide.

3. Process according to claim 1 or 2, wherein the plastics film is a polypropylene film.

4. Process according to any one of claims 1 to 3, comprising, after the step of wrapping the sandwich, a step of placing the sandwich-susceptor-film assembly in a carton.

5. Process according to any one of claims 1 to 4, wherein the freezing step is carried out for from 3 to 10 hours at a temperature of between -30°C and -50°C.

6. Manufacturing process according to any one of claims 1 to 5, wherein the step of manufacturing the bread for the sandwich comprises, after the shaping step, a step of steaming at a temperature of between 35°C and 40°C at a hygrometry of 90°, followed by a step of baking at a temperature of between 200°C and 250°C.

7. Manufacturing process according to any one of claims 1 to 6, comprising the following steps:
a) a kneading step,
b) a step of shaping the bread, the shaping step being carried out less than 15 minutes after the end of the kneading step,
c) a step of steaming the bread at a temperature of between 35°C and 40°C at a hygrometry of 90°,
d) a step of baking the bread at a temperature of between 200°C and 250°C,
e) a step of drying the bread, optionally followed by a cooling step,
f) a step of cutting the bread,
g) a step of filling the sandwich,
h) a step of wrapping the sandwich,
i) a step of placing the sandwich in a carton, and
j) a step of freezing for from 3 to 10 hours at a temperature of between -30°C and -50°C.
